# EUROPÄISCHE PATENTANMELDUNG

(11) **EP 4 109 195 A1**
(43) Veröffentlichungstag der Anmeldung: **28.12.2022**
(21) Anmeldenummer: 22176336.0
(22) Anmeldetag: 08.12.2016
(51) Int. Cl.: G05D 1/02

(54) **FERNSTEUERUNG EINES MOBILEN, AUTONOMEN ROBOTERS**

(30) Priorität: 11.12.2015 DE 102015121666
(62) Teilanmeldung aus: 16809773.1
(71) Anmelder: Robart GmbH, 4020 Linz (AT)
(72) Erfinder: ARTES, Harold, 4020 Linz (AT); BERLACH, Reinhard, 4020 Linz (AT); MASCHER, Erwin, 4020 Linz (AT); VOGEL, Reinhard, 4020 Linz (AT)
(74) Vertreter: Westphal, Mussgnug & Partner, Patentanwälte mbB

(57) **Zusammenfassung**

Es wird ein System mit einem mobilen autonomen Roboter und mindestens zwei mobilen Endgeräten zur Steuerung des Roboters beschrieben. Gemäß einem Ausführungsbeispiel sind die mobilen Endgeräte dazu ausgebildet, mit dem Roboter zu kommunizieren. Der Roboter ist dazu ausgebildet, Änderungen von im Roboter gespeicherten Informationen durch eines der mobilen Endgeräte zu ermöglichen und eine Information betreffend Änderungen an mindestens ein anderes der mobilen Endgeräte zur Verfügung zu stellen.

## Beschreibung

### TECHNISCHES GEBIET

Die Erfindung betrifft einen mobilen, autonomen Serviceroboter wie z.B. einen Roboter zur Bearbeitung von Oberflächen (Reinigung von Böden, Mähen von Gras, Anstreichen einer Fläche, etc.). Die Erfindung betrifft insbesondere Verfahren zur Fernsteuerung derartiger Roboter.

### HINTERGRUND

In den letzten Jahren finden autonome mobile Roboter, insbesondere Serviceroboter, zunehmend Verwendung im Haushaltsbereich, beispielsweise zur Reinigung von Fußböden oder zur Überwachung einer Wohnung (Nachtwächterfunktion) oder zum Transport von Gegenständen in einer Wohnung. Einige dieser Serviceroboter können mittels eines als Fernsteuerung dienenden Gerätes (wie beispielsweise einem Computer) überwacht und gesteuert werden. Es sind ebenfalls Serviceroboter bekannt, welche über große Entfernungen Nachrichten an einen Nutzer senden oder ferngesteuert werden können, indem sie beispielsweise eine Verbindung über das Internet oder das Mobilfunknetz nutzen, um mit einem mobilen Endgeräte des Benutzers zu kommunizieren.

In den bekannten Lösungen ist entweder eine nur lokal verwendbare Steuerung des Roboters vorgesehen oder eine Steuerung über das Internet, wobei eine Steuerung und Kontrolle eines Roboters über das Internet anfällig für Angriffe durch unbefugte Personen ist. Des Weiteren sendet der Roboter Informationen z.B. über seinen Status oder über die vom Roboter ausgeführte oder auszuführende Tätigkeit, mit denen der Nutzer nicht unbedingt etwas anfangen kann. Beispielsweise ist die Information, dass der Roboter ein Zimmer aufgrund einer geschlossenen Tür nicht reinigen kann, für einen Nutzer von geringer Relevanz, wenn er nicht in der Nähe seiner Wohnung ist, da er in diesem Fall das Problem nicht sofort beheben kann.

Die der Erfindung zugrunde liegende Aufgabe besteht darin, ein Verfahren zur Verfügung zu stellen, um einen autonomen mobilen Serviceroboter mittels eines mobilen Endgeräts zu überwachen und zu steuern, ohne dass der Nutzer sich über den Kommunikationsweg zwischen Endgerät und Roboter kümmern muss. Des Weiteren soll die "Intelligenz" der Kommunikation des Roboters mit dem Benutzer verbessert werden.

### ZUSAMMENFASSUNG

Die oben genannte Aufgabe wird durch ein System gemäß Anspruch 1 gelöst. Verschiedene Ausführungsformen und Weiterentwicklungen der Erfindung sind Gegenstand der abhängigen Ansprüche.

Es wird ein System mit mindestens einen mobilen autonomen Roboter (Serviceroboter) und mindestens einem mobilen Endgerät zur Steuerung des Roboters beschrieben. Gemäß einem Ausführungsbeispiel umfasst das System des Weiteren mindestens einen Kommunikationsserver, der über eine Netzwerkschnittstelle mit Zugang zum öffentlichen Internet verfügt. Dabei sind der Roboter und das mobile Endgerät dazu ausgebildet, sowohl über eine erste Verbindung als auch über mindestens eine zweite Verbindung zu kommunizieren, wobei die zweite Verbindung eine lokale drahtlose Kommunikationsverbindung und die erste Verbindung eine indirekte Kommunikationsverbindung ist, bei der der Kommunikationsserver die Kommunikation zwischen dem Roboter und dem mobilen Endgerät vermittelt. Wenn eine der beiden Verbindungen abreißt oder ein Aufbau der jeweiligen Kommunikationsverbindung fehlschlägt wird versucht, die Kommunikationsverbindung zu wechseln.

Des Weiteren wird ein Verfahren zur Kommunikation zwischen einem mobilen Endgerät und einem mobilen autonomen Roboter beschrieben. Gemäß einem Ausführungsbeispiel umfasst das das Verfahren den Aufbau einer Kommunikationsverbindung zwischen dem Roboter und dem mobilen Endgerät über eine erste Verbindung oder über eine zweite Verbindung, wobei die zweite Verbindung eine lokale drahtlose Kommunikationsverbindung und die erste Verbindung eine indirekte Kommunikationsverbindung ist, bei der ein über das Internet erreichbarer Kommunikationsserver die Kommunikation zwischen dem Roboter und dem mobilen Endgerät vermittelt. Das Verfahren umfasst weiter das Wechseln der Kommunikationsverbindung von der zweiten Verbindung auf die erste Verbindung, wenn die zweite Verbindung abreißt oder der Aufbau der zweiten Verbindung fehlschlägt.

Des Weiteren wird ein Verfahren zur Kopplung eines Endgerätes mit einem mobilen autonomen Roboter beschreiben. Gemäß einem Ausführungsbeispiel initiiert der Roboter zunächst eine Kommunikationsverbindung zu einem Server, und das mobile Endgerät sendet eine Anfrage an den Server. Der Server informiert mittels einer Nachricht den Roboter über die Anfrage des Endgeräts. Der Roboter wartet dann auf eine bestimmte Nutzerinteraktion, mittels der die Anfrage durch den Nutzer bestätigt wird. Wenn die Nutzerinteraktion innerhalb einer vorgegebenen Zeit erfolgt, führt der Roboter Steuerkommandos, die künftig von dem Endgerät über den Server an den Roboter gesendet werden, aus, andernfalls wird eine Steuerung des Roboters über die Kommunikationsverbindung zu dem Server verweigert.

Des Weiteren wird ein System mit mindestens einem autonomen, mobilen Roboter und mindestens einem mobilen Endgerät beschrieben. Gemäß einem Ausführungsbeispiel sind der Roboter und das mobile Endgerät dazu ausgebildet, über mindestens eine erste drahtlose Verbindung zu kommunizieren. Der Roboter ist dazu ausgebildet, Information über den Aufenthaltsort eines Nutzers (z.B. basierend auf dem Aufenthaltsort des Endgerätes) zu ermitteln, und abhängig von der ermittelten Information über den Aufenthaltsort zu entscheiden, ob und, wenn ja, welche Informationen an das mobile Endgerät gesendet werden und/oder ob und, wenn ja, welche Tätigkeiten von dem Roboter ausgeführt, unterbrochen, fortgesetzt oder beendet werden.

Des Weiteren wird ein System mit mindestens einem autonomen, mobilen Roboter und mindestens zwei mobilen Endgeräten beschrieben. Gemäß einem Ausführungsbeispiel sind die mobilen Endgeräte jeweils dazu ausgebildet, mit dem Roboter zu kommunizieren. Der Roboter ist dazu ausgebildet, Änderungen von im Roboter gespeicherten Informationen durch eines der mobilen Endgeräte zu ermöglichen und eine Nachricht betreffend eventuelle Änderungen an mindestens ein anderes der mobilen Endgeräte zu senden.

Des Weiteren wird ein System mit mindestens einem autonomen, mobilen Roboter, mindestens zwei mobilen Endgeräten und mindestens einem Server mit Internetzugang beschrieben. Die mobilen Endgeräte sind jeweils dazu ausgebildet, mit dem Roboter zu kommunizieren, wobei der Server die Kommunikation vermittelt. Der Roboter und Server sind dazu ausgebildet, im Roboter gespeicherte Informationen mit im Server gespeicherten Informationen zu synchronisieren.

Die Erfindung betrifft auch einen autonomer mobiler Roboter. Gemäß einem Ausführungsbeispiel weist der Roboter ein Navigationsmodul auf, welches dazu ausgebildet ist, anhand einer Karte des Einsatzgebiets des Roboters und im Roboter verfügbaren Sensorinformationen den Roboter durch das Einsatzgebiet zu navigieren. Eine Detektionseinheit des Roboters ist dazu ausgebildet ist, zumindest eines der folgenden Ereignisse zu detektieren: der Nutzer betritt oder verlässt das Einsatzgebiet, hat es betreten oder verlassen oder ist gerade dabei, das Einsatzgebiet zu betreten oder zu verlassen. Ein Steuerungsmodul des Roboters ist dazu ausgebildet ist, eine vordefinierte Aktion des Roboters auszulösen, wenn die Detektionseinheit eines der Ereignisse detektiert, wobei die vordefinierte Aktion darin besteht, dass der Roboter zu einem vorab in der Karte definierten Ort fährt und dort eine vorab definierte Tätigkeit beginnt.

Des Weiteren wird ein System mit einem ersten und mindestens einem zweiten autonomen, mobilen Roboter beschrieben Gemäß einem Ausführungsbeispiel sind diese dazu ausgebildet, miteinander zu kommunizieren, wobei der erste Roboter dazu ausgebildet ist, eine erste Tätigkeit auszuführen, und der zweite Roboter dazu ausgebildet ist, eine zweite Tätigkeit auszuführen. Der erste Roboter ist dazu ausgebildet, ein Kommando eines Nutzers entgegenzunehmen eine Tätigkeit zu starten, zu unterbrechen und/oder abzubrechen, wobei der erste Roboter den zweiten Roboter über das Kommando des Nutzers benachrichtigt und der zweite Roboter dazu ausgebildet ist, basierend auf dieser Benachrichtigung zu entscheiden, die zweite Tätigkeit zu starten, mit Zeitverzögerung zu starten, zu unterbrechen und/oder abzubrechen.

Gemäß einem weiteren Ausführungsbeispiel des oben erwähnten Systems ist zumindest der erste Roboter dazu ausgebildet ist, zu detektieren, ob ein Nutzer das Robotereinsatzgebiet verlässt oder betritt, wobei der erste Roboter den zweiten Roboter benachrichtigt, wenn er detektiert hat, dass ein Nutzer das Robotereinsatzgebiet verlässt oder betritt, und der zweite Roboter dazu ausgebildet ist, basierend auf dieser Benachrichtigung zu entscheiden, die zweite Tätigkeit zu starten, mit Zeitverzögerung zu starten, zu unterbrechen und/oder abzubrechen.

Weitere Ausführungsbeispiele beziehen sich auf Verfahren zur Steuerung von autonomen, mobilen Robotern mit mindestens einem mobilen Endgerät. Es sei explizit erwähnt, dass verschiedene, im Kontext eines Ausführungsbeispiels beschriebene technische Merkmale auch (sofern nicht explizit anders beschrieben) bei allen anderen Ausführungsbeispielen verwendet werden können, um so weitere Ausführungsbeispiele zu schaffen.

### KURZE BESCHREIBUNG DER ABBILDUNGEN

Die Erfindung wird nachfolgend anhand von den in den Abbildungen dargestellten Beispielen näher erläutert. Die Darstellungen sind nicht zwangsläufig maßstabsgetreu und die Erfindung beschränkt sich nicht nur auf die dargestellten Aspekte. Vielmehr wird Wert darauf gelegt, die der Erfindung zugrunde liegenden Prinzipien darzustellen. In den Abbildungen zeigt:
Figur 1 zeigt die Steuerung eines mobilen autonomen Roboters mittels eines mobilen Endgerätes *(mobile device),* welches über eine direkte drahtlose Verbindung (z.B. Bluetooth) mit dem Roboter kommuniziert.
Figur 2 zeigt die Steuerung eines mobilen autonomen Roboters mittels eines mobilen Endgerätes, welches über ein drahtloses lokales Netzwerk (z.B. WLAN, *Wireless Local Area Network)* mit dem Roboter kommuniziert.
Figur 3 zeigt die Steuerung eines mobilen autonomen Roboters mittels eines mobilen Endgerätes, wobei ein über das Internet erreichbarer Server die Kommunikation zwischen dem mobilen Endgerät und dem Roboter vermittelt.
Figur 4 zeigt die zwei alternativ verwendbaren Verbindungen zur Kommunikation zwischen mobilem Endgerät und Roboter.
Figur 5 zeigt ein Beispiel der Sicherung von Ereignisprotokollen und anderer im Roboter gespeicherten Informationen auf einem über eine Internetverbindung erreichbaren Kommunikati onsserver.
Figur 6 illustriert ein Beispiel zur sicheren Kopplung von einem Roboter und mindestens einem mobilen Endgerät.
Figur 7 zeigt mehrere Beispiele von Gegenständen, welche vom Roboter detektiert werden können, wobei dem Nutzer beim Verlassen des Robotereinsatzgebiets eine Nachricht gesendet wird, wenn ein Gegenstand detektiert wird.
Figur 8 zeigt ein Beispiel der Nutzung eines GPS-Empfängers im mobilen Endgerät zur Entscheidung, ob und welche Nachrichten vom Roboter an den Nutzer gesendet werden.

### DETAILLIERTE BESCHREIBUNG

Gemäß den hier beschriebenen Ausführungsbeispielen soll dem Nutzer des Serviceroboters die Steuerung und Überwachung *(monitoring)* seines autonomen mobilen Serviceroboters mit einem mobilen Endgerät wie beispielsweise einer Smartwatch, einem Smartphone oder Tablet-PC ermöglicht werden. Dies soll sowohl lokal im Einsatzgebiet des Roboters (z.B. die Wohnung des Nutzers) als auch aus der Ferne (außerhalb des Einsatzgebiets des Roboters) möglich sein. Hierbei sollen sich für den Benutzer keine signifikanten Änderungen in der Handhabung des mobilen Endgeräts zur Steuerung und Überwachung des Serviceroboters ergeben.

Um eine sichere und zuverlässige Kommunikation zwischen dem Roboter und einem mobilen Endgerät, das sich außerhalb des Robotereinsatzgebietes befindet, zu ermöglichen, können sich sowohl der Roboter als auch das mobile Endgerät mit einem Kommunikationsserver verbinden, der über das Internet erreichbar sein kann. Im Robotereinsatzgebiet (wie beispielsweise in der Wohnung des Nutzers) soll dagegen die Steuerung des Roboters 1 nicht über das Internet, sondern über eine direkte Verbindung zwischen Roboter und mobilem Endgerät erfolgen. Hierdurch wird unnötiger (und möglicherweise kostenpflichtiger) Datenverkehr (auf Nutzer- und Serverseite) vermieden und die Qualität und Sicherheit des Datenaustauschs verbessert. Die direkte Verbindung zwischen Roboter und mobilem Endgerät kann z.B. über ein Heimnetzwerk wie beispielsweise über ein WLAN *(Wireless Local Area Network)* hergestellt werden. Weitere Details zu möglichen Verbindungsarten werden später noch erläutert. Unter einem Server wird in diesem Kontext nicht unbedingt ein bestimmter Computer oder eine bestimmte Hardware verstanden, sondern ein Serverdienst *(service, daemon),* der auf einem Computer ausgeführt wird. Der Kommunikationsserver ist also eine Software, welche die Kommunikation zwischen dem Endgerät und dem Roboter vermittelt.

Der autonome, mobile Roboter kann als Serviceroboter selbsttätig eine oder mehrere Aufgaben ausführen wie z.B. die Reinigung oder Überwachung einer Wohnung, eines Gebäudes (oder eines Teils davon) sowie den Transport von Gegenständen innerhalb eines Gebäudes. Jeder Roboter kann eine eindeutige Identifikationsnummer (UID, *Unique Identification Number)* haben, mit der er sich beispielsweise bei dem erwähnten Kommunikationsserver anmelden kann. Darüber hinaus kann ein Nutzer seinem Roboter auch einen Namen zuweisen. Um eine Aufgabe autonom in einem Einsatzgebiet verrichten zu können, besitzt ein Serviceroboter üblicherweise Vorrichtungen zur Navigation. Beispielsweise kann er mit Sensoren zur Hinderniserkennung und Erstellung einer Karte seiner Umgebung ausgestattet sein.

Das mobiles Endgerät kann z.B. eine Smartwatch, ein Smartphone, ein Tablet-PC oder ein tragbarer Computer mit einer passenden Anwendung (Applikation, kurz: App) sein, welche eine grafische Benutzeroberfläche zur Verfügung stellt. Der autonome mobile Roboter und das mobile Endgerät enthalten jeweils mindestens eine Kommunikationsschnittstelle. Dies ist beispielsweise ein WLAN-Modul, mit dem eine Verbindung zu einem lokalen WLAN (im Einsatzgebiet des Roboters) hergestellt werden kann. Das WLAN kann eine Verbindung zum Internet und/oder eine direkte Verbindung zwischen Roboter und dem mobilen Endgerät ermöglichen. Andere mögliche und bekannte Kommunikationsschnittstellen sind drahtlose Verbindungen wie beispielsweise das Mobilfunknetz (UMTS, LTE), Bluetooth, ZigBee, Z-Wave oder Nahfeldkommunikation (NFC), oder direkte Verbindungen wie beispielsweise eine USB-Schnittstelle.

Gemäß den hier beschriebenen Ausführungsbeispielen kann die Steuerung und Überwachung des Roboters mit Hilfe des mobilen Endgeräts verschiedene Aspekte umfassen. Das mobile Endgerät kann z.B. zur Anzeige von Statusinformationen, zur Nutzung von Kalenderfunktionen und zur Eingabe von Kommandos an den Roboter genutzt werden. Statusinformationen sind beispielsweise die Anzeige des Ladestatus, eine Karte des Robotereinsatzgebiets mit Informationen zu einer Reinigung oder einer Überwachung dieses Gebiets oder die Position des Roboters in seinem Einsatzgebiet. Mit Hilfe der erwähnten Kalenderfunktion können dem Roboter regelmäßig wiederkehrende Aufgaben oder einmalige Aufgaben, die in der Zukunft liegen, zugewiesen werden. Das heißt, für die vom Roboter durchzuführenden Aufgaben kann ein Zeitplan erstellt werden. Beispiele hierfür sind "Beginne eine Reinigung jede Woche Montags 9:00 Uhr" oder "Überwache heute Abend von 20:00 Uhr bis 22:00 Uhr die Wohnung auf ungewöhnliche Aktivitäten". Kommandos an den Roboter sind beispielsweise der Start einer neuen Aufgabe oder die Unterbrechung der Ausführung einer Aufgabe durch den Roboter. Dies kann z.B. die Reinigung oder Überwachung eines vorgebbaren Gebiets sein oder die Fahrt zu einem vorgebbaren Ort wie beispielsweise einer Basisstation des Roboters.

Gemäß den hier beschriebenen Ausführungsbeispielen kann das mobile Endgerät zur Steuerung und Überwachung des Roboters verschiedene Anfragen an den Roboter senden, welcher eine entsprechende Antwort an das mobile Endgerät zurücksendet und/oder eine entsprechende Aktion ausführt. Diese Anfragen lassen sich in zwei Gruppen unterteilen:
(i) regelmäßige Anfragen, insbesondere zum Status des Roboters,
(ii) nutzerinduzierte Anfragen, insbesondere Kommandos an den Roboter.
Regelmäßige Anfragen sind beispielsweise Statusinformationen wie der Ladestatus oder auch die regelmäßige Aktualisierung von Karteninformationen wie beispielsweise eine Reinigungskarte (in welche der Roboter die Bereiche markieren kann, die er bereits gereinigt hat). Nutzerinduzierte Anfragen sind einmalige beziehungsweise unvorhersehbare Anweisungen, wie die Änderung eines Kalendereintrags (beispielsweise für eine regelmäßige Reinigung), oder das Kommando an den Roboter, sofort eine Aufgabe wie beispielsweise eine Schnellreinigung durchzuführen oder die Ausführung einer Aufgabe abzubrechen.

Der oben erwähnte Kommunikationsserver kann einen Kommunikationsservice (Serverdienst) bereitstellen, der die Kommunikation zwischen Roboter und dem mobilen Endgerät über große Entfernungen ermöglicht und z.B. über das Internet permanent erreichbar ist. Hierfür können sich sowohl der Roboter als auch das mobile Endgerät beim Kommunikationsserver anmelden (registrieren). Der Kommunikationsserver ist beispielsweise als Cloud Service, als virtueller Server, als einzelner Dienstrechner *(Host)* oder als Verbund von Dienstrechnern *(Cluster)* eingerichtet. In einigen Ausführungsbeispielen kann die Verbindung zwischen Roboter und Kommunikationsserver oder zwischen Endgerät und Kommunikationsserver nicht direkt sondern durch Vermittlung eines weiteren Serverdienstes erfolgen. Beispielsweise kann für eine Heimautomatisierung *(home automation, smart home)* die Kontrolle für mehrere unterschiedliche Geräte in einer Anwendung (Applikation) für das mobile Endgerät gebündelt werden. Diese Anwendung nimmt nun Kontakt zu einem zentralen Server auf, welcher die Kommunikation an den für das jeweilige Gerät (beispielsweise den betrachteten Serviceroboter) spezialisierten Kommunikationsserver vermittelt oder weiterleitet.

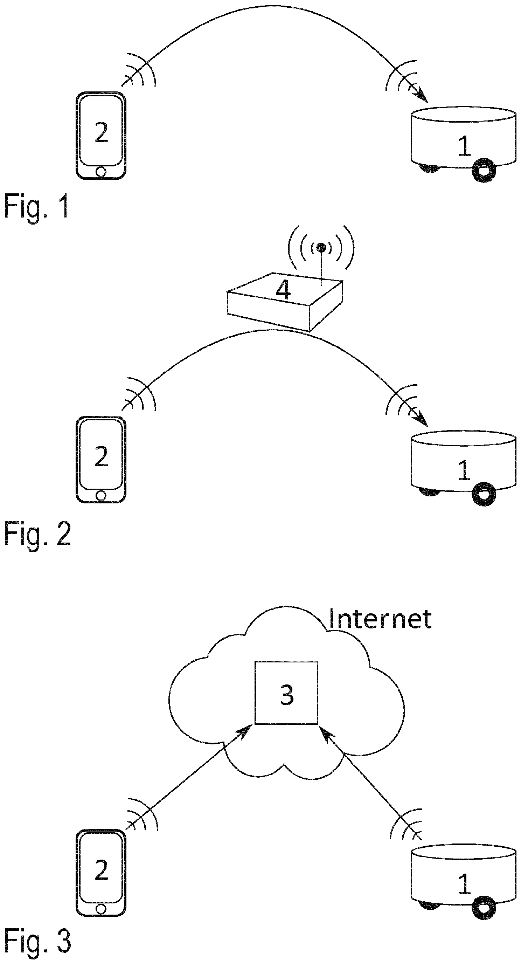

Unterschiedliche Möglichkeiten zum Aufbau einer Verbindung zwischen einem mobilen autonomen Roboter 1 und einem mobilen Endgerät 2 sind in den Fig. 1 bis 3 dargestellt. Gemäß dem hier beschriebenen Ausführungsbeispiel prüft das mobile Endgerät 2 die zur Verfügung stehenden Verbindungsarten zu dem mobilen Roboter 1 und wählt automatisch eine passende Verbindung, sobald der Nutzer die Funktion zur Steuerung und Überwachung des autonomen mobilen Roboters 1 auf dem mobilen Endgerät 2 aktiviert. Hierbei können bestimmte Verbindungsarten bevorzugt werden, beispielsweise kann eine lokale Verbindung (direkte Verbindung oder Verbindung innerhalb eines WLAN) bevorzugt werden.

In dem Beispiel aus Fig. 1 bietet der Roboter 1 eine direkte drahtlose Verbindung wie beispielsweise Bluetooth, NFC oder WLAN an, welche das Endgerät 2 erkennen und dem Roboter 1 zuordnen kann. Beispielsweise nutzt der Roboter 1 sein WLAN-Modul um ein WLAN mit einer ihm eindeutig zuordenbaren Netzkennung (beispielsweise SSID, *Service Set Identifier*) zu initiieren, in dem er als Access-Point (Router) dient. Alternativ kann das mobile Endgerät 2 mit dem Roboter 1 ein mobiles Ad-hoc-Netzwerk *(mobile ad hoc network,* MANET) bilden (ohne Access-Point). Das Endgerät 2 erkennt so die Verfügbarkeit eines Roboters 1 an der Verfügbarkeit des zu dem Roboter 1 gehörigen WLAN (z.B. an dem Vorhandensein der SSID des Roboters). Die Zuordnung erfolgt beispielsweise indem die Netzkennung die UID des Roboters enthält.

In dem Beispiel gemäß Fig. 2 sind sowohl der Roboter 1 als auch das mobile Endgerät 2 in einem lokalen drahtlosen Netzwerk angemeldet, beispielsweise in einem WLAN, welches von einem Router 4 mit WLAN-Accesspoint bereitgestellt wird. Das mobile Endgerät 2 kann eine mDNS-Anfrage *(multicast Domain Name System)* senden, um zu ermitteln, ob und ggf. welche Roboter 1 in einem lokalen (im Einsatzgebiet des Roboters verfügbaren) WLAN verfügbar sind, um diesem bzw. diesen Anfragen und Kommandos zu senden. Um unnötigen Datenverkehr in verschiedenen drahtlosen Netzwerken zu vermeiden, kann sich das Endgerät 2 merken (d.h. speichern), in welchen Netzwerken (SSID) in der Vergangenheit ein Roboter verfügbar war. In diesen bekannten Netzwerken prüft es automatisch die Verfügbarkeit des Roboters 1. In anderen Netzwerken sucht das Endgerät 2 nur nach Aufforderung durch den Nutzer nach einem Roboter 1.

In dem in Fig. 3 gezeigten Beispiel sind sowohl der Roboter 1 als auch das mobile Endgerät 2 mit einem Kommunikationsserver 3 verbunden, der (für das Endgerät 2 und den Roboter 1) beispielsweise über das Internet erreichbar ist. Die Verbindung zum Internet kann beispielsweise über einen WLAN-Router mit Internetverbindung (z.B. für den Roboter 1) oder über das Mobilfunknetz (z.B. für das mobile Endgerät 2) geschehen. Wenn das mobile Endgerät 2 den Kommunikationsserver 3 erreicht, so sendet es eine Anfrage *(request)* an den Kommunikationsserver 3. Dieser sendet an das Endgerät 2 eine Antwort *(response)* und teilt so dem Endgerät 2 mit, welche Roboter 1 über den betreffenden Kommunikationsserver 3 verfügbar (also mit dem Kommunikationsserver 3 verbunden) sind. Das mobile Endgerät 2 kann nun Anfragen und Kommandos für den Roboter 1 an den Kommunikationsserver 3 senden. Dieser leitet Anfragen und Kommandos des Endgeräts 2 an den Roboter 1 weiter. Der Roboter 1 sendet wiederum seine Antwort an den Kommunikationsserver 3, welcher sie an das mobile Endgerät 2 weiterleitet.

Gemäß einem Ausführungsbeispiel kann das mobile Endgerät 2 über den Kommunikationsserver 3 eine Anfrage an den Roboter 1 senden, welche lokale Verbindungsmöglichkeit er derzeit ermöglicht. Hierauf antwortet der Roboter 1 dem Kommunikationsserver und teilt diesem mit, in welchem WLAN (SSID) mit welcher IP-Adresse er angemeldet ist. Das mobile Endgerät kann nun prüfen, ob dieses WLAN an seinem Standort verfügbar ist und eine lokale Verbindung aufbauen. Dieses Vorgehen ist vorteilhaft, wenn z.B. eine mDNS-Anfrage innerhalb eines WLAN aus technischen Gründen nicht möglich oder zu langsam ist. Darüber hinaus kann das mobile Endgerät 2 über die Zeit beobachten, ob es in den Empfangsbereich des WLANs kommt und sich dann direkt mit dem Roboter über das WLAN verbinden ohne eine nochmalige mDNS-Anfrage zu stellen.

Das mobile Endgerät 2 kann gemäß einem Ausführungsbeispiel während der Nutzung der Applikation am Endgerät die zur Verfügung stehenden Verbindungsarten zu dem Roboter 1 überwachen. Wenn die aktuelle Verbindung (aus welchen Gründen auch immer) gestört wird, so versucht es eine erneute Verbindung über einen alternativen Weg aufzubauen. Auch unabhängig von einer Störung der aktuell verwendeten Verbindung zwischen dem mobilen Endgerät 2 und dem Roboter 1 kann das Endgerät nach alternativen Verbindungsmöglichkeiten suchen. Wenn die aktuelle Verbindung den Kommunikationsserver 3 nutzt, so kann das mobile Endgerät 2 laufend oder in regelmäßigen Abständen nach einer lokalen Verbindungsmöglichkeit suchen, um dann diese statt der Verbindung über den Kommunikationsserver 3 zu verwenden. Das mobile Endgerät 2 kann den Nutzer und/oder den Roboter 1 über einen Wechsel der Verbindungsmöglichkeit informieren, wodurch diese hierauf reagieren können. Alternativ oder zusätzlich kann der Roboter dazu ausgebildet sein, einen Wechsel der Kommunikationsverbindung zu dem Endgerät 2 zu detektieren, und ggf. auf einen detektierten Wechsel zu reagieren. Beispielsweise kann der Roboter feststellen, ob ein Kommando oder eine Anfrage direkt vom Endgerät 2 oder vom Kommunikationsserver empfangen wurde (z.B. anhand der IP-Adresse).

Beispielsweise sind der Roboter 1 und das mobile Endgerät 2 in dem gleichen (lokalen) WLAN angemeldet und kommunizieren über diese Verbindung. Wenn nun der Nutzer mit dem mobilen Endgerät 2 die Wohnung verlässt, so verliert das mobile Endgerät 2 die Verbindung zu dem lokalen WLAN am Einsatzgebiet des Roboters und somit die direkte Verbindung zum Roboter. Das mobile Endgerät 2 kann nun versuchen, eine Verbindung zu dem Kommunikationsserver 3 (beispielsweise über das Mobilfunknetz) aufzubauen, um sich über diesen mit dem Roboter 1 zu verbinden. Gleichzeitig wird beispielsweise der Nutzer gefragt, ob der Roboter 1 eine Tätigkeit wie beispielsweise die Überwachung oder Reinigung der Wohnung starten soll. Alternativ kann der Roboter über die Änderung der Verbindungsart informiert werden. Dieser kann nun prüfen, ob er seinen aktuellen Status ändern soll, indem er beispielsweise selbsttätig eine Aufgabe startet. Beispielsweise kann das Verlassen der Wohnung durch den Nutzer die Überwachung oder Reinigung der Wohnung durch den Roboter 1 automatisch auslösen.

In einem weiteren Beispiel kommt der Nutzer mit dem mobilen Endgerät 2 nach Hause. Hier erkennt das mobile Endgerät 2 die neue lokale Verbindungsmöglichkeit zum Roboter 1, beispielsweise über ein gemeinsames WLAN oder über eine Bluetooth-Funkverbindung. Nun kann dem Nutzer eine kurze Statusmeldung gegeben werden. Insbesondere kann der Nutzer über besondere Ereignisse informiert werden. Beispielsweise kann der Nutzer nun informiert werden, dass der Roboter 1 einen Raum nicht reinigen konnte, weil eine Tür verschlossen war. Da der Nutzer nun zu Hause ist, kann er die Tür öffnen, so dass der Roboter 1 die Reinigung beenden kann. Alternativ kann der Roboter 1 auf die Möglichkeit einer neuen lokalen Verbindung reagieren, indem er beispielsweise die aktuelle Tätigkeit wie die Reinigung oder Überwachung einer Wohnung beendet. So wird eine Störung des Nutzers durch die Arbeit des Roboters 1 vermieden. Die Möglichkeit, Nachrichten an den Nutzer bei einer Änderung der Verbindungsart oder abhängig von der Verbindungsart zu senden, wird weiter unten noch erläutert.

Um die in Fig. 3 dargestellte Art der Verbindung zwischen mobilem Endgerät 2 und Roboter 1 mittels des Kommunikationsservers 3 zu ermöglichen, muss der Roboter 1 mit dem Kommunikationsserver 3 verbunden sein. Da der Roboter 1 sich normalerweise in einem privaten Netzwerk (z.B. WLAN) befindet, ist in der Regel (z.B. aufgrund wechselnder IP-Adressen und/oder verschiedener Sicherheitsvorrichtungen wie Firewalls und ähnliches) kein direkter Zugriff von außerhalb des privaten Netzwerks möglich. Der Kommunikationsserver 3 kann in der Regel nicht von sich aus eine Verbindung zu dem Roboter 1 initiieren. Deshalb wird die Verbindung zwischen Roboter 1 und Kommunikationsserver 3 in der Regel vom Roboter 1 initiiert. Die Verbindung kann dauerhaft sein oder nur für einen kurzen Datenaustausch geöffnet werden. Bei einer kurzen Verbindungszeit kann der Verbindungsaufbau regelmäßig wiederholt werden und/oder nur wenn sich der Status des Roboters 1 geändert hat.

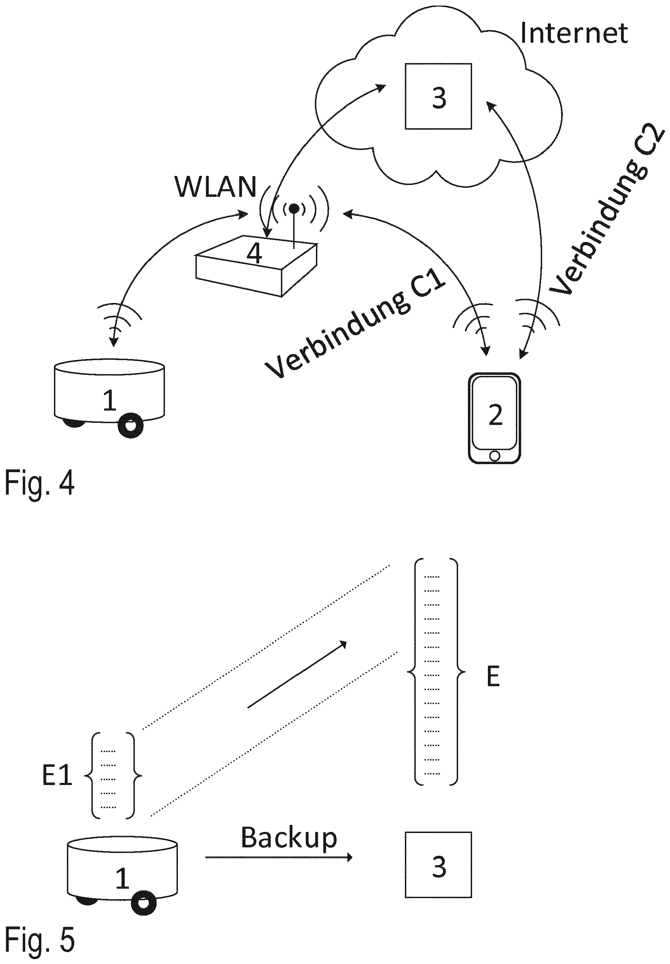

Ein weiteres Beispiel ist in Fig. 4 dargestellt. Demnach ist der Roboter 1 an einem Router 4 mit WLAN-Zugangspunkt (*Access Point*) in seinem Einsatzgebiet angemeldet und damit mit einem drahtlosen lokalen Netzwerk (WLAN) in seinem Einsatzgebiet verbunden. Der WLAN-Zugangspunkt kann statt in dem Router auch in dem Roboter 1 integriert sein. Über den WLAN-Router 4 kann der Roboter eine Verbindung mit dem Kommunikationsserver 3 über das Internet herstellen. Das Endgerät 2 kann, wenn es sich im Einsatzgebiet des Roboters oder in dessen Nähe befindet, sich ebenfalls mit dem drahtlosen lokalen Netzwerk verbinden und direkt in lokalen (ohne zwischenliegenden Router) Netzwerk mit dem Roboter 1 kommunizieren (Verbindung C1). Alternativ kann das Endgerät 2 über eine andere Kommunikationsverbindung (Verbindung C2) mit dem Server 3 über das Internet verbinden. Der Server 3 vermittelt wie beschrieben die Kommunikation zwischen Roboter 1 und Endgerät 2, welche also über den Server 3 indirekt kommunizieren.

In einem einfachen Beispiel leitet der Kommunikationsserver 3 die Kommunikation zwischen Roboter 1 und mobilem Endgerät 2 direkt weiter. Hierfür ist jedoch eine permanente und sehr gute Verbindung zwischen Roboter 1 und Kommunikationsserver 3 sowie zwischen dem mobilen Endgerät 2 und dem Kommunikationsserver 3 erforderlich. Um Anfragen des mobilen Endgeräts 2 über den Status des Roboters 1 schnell beantworten zu können, ist es vorteilhaft, wenn der Kommunikationsserver 3 die Informationen zum aktuellen Status des Roboters 2 regelmäßig abfragt und speichert. Bei einer reinen Informationsanfrage des mobilen Endgeräts 2 kann der Kommunikationsserver sofort eine Antwort senden, ohne zwischen Anfrage des mobilen Endgeräts 2 und der zugehörigen Antwort die Anfrage an den Roboter weiterleiten zu müssen und auf dessen Antwort zu warten. Hierbei kann zusätzlich geprüft werden, wie lange die letzte Verbindung zum Roboter 1 her ist, d.h. wie aktuell die vom Roboter 1 empfangenen und gespeicherten Informationen sind. Wenn dieser Zeitraum einen vorbestimmten Wert (beispielsweise fünf Minuten) überschreitet, so wird dem mobilen Endgerät 2 zusätzlich mitgeteilt, dass derzeit keine Verbindung zum Roboter besteht. Eine Anweisung an den Roboter 1 würde der Kommunikationsserver zwischenspeichern bis der Roboter 1 eine erneute Verbindung gestartet hat. Hierbei kann ebenfalls ein vorbestimmter Zeitraum (beispielsweise 10 Sekunden) definiert werden, nachdem dem mobilen Endgerät mitgeteilt wird, dass der Roboter nicht erreichbar ist. Beispielsweise kann der Nutzer (z.B. durch Eingabe am Endgerät 2) entscheiden, ob ein an den Kommunikationsserver 3 gesendetes Kommando nach dieser Zeit verfällt oder länger gültig bleibt

Um den Datenverkehr zwischen Roboter 1 und Kommunikationsserver 3 zu reduzieren, können die vom Kommunikationsserver 3 angeforderten Informationen z.B. abhängig vom letzten bekannten Status des Roboters sein. Beispielsweise muss keine Aktualisierung einer Karte abgefragt werden, wenn der Roboter 1 sich an seiner Basisstation neu auflädt.

Gemäß dem in Fig. 5 skizzierten Ausführungsbeispiel speichert der Roboter 1 für eine bestimmte Zeit Ergebnisse und Ereignisse seiner Arbeit in einem Ereignisprotokoll E1 *(Event History)* und stellt diese dem Nutzer zur Prüfung und Überwachung zur Verfügung (z.B. direkt oder indirekt über den Kommunikationsserver 3). Beispielsweise kann der Nutzer so zwei oder mehr Reinigungsergebnisse miteinander vergleichen. Da der Speicherplatz auf dem Roboter beschränkt ist, ist der Zeitraum, in dem Ereignisse gespeichert werden können, oder die Anzahl der Ereignisse jedoch stark begrenzt. Wenn der Status des Roboters und/oder das Ereignisprotokoll E1 des Roboters 1 regelmäßig an den Kommunikationsserver 3 gesendet und dort gespeichert werden (Ereignisprotokoll E am Server 3), so kann dem Nutzer ein längerer Zeitraum mit gespeicherten Ereignissen oder eine größere Anzahl an Ereignissen angeboten werden. Darüber hinaus können die auf diese Weise an den Kommunikationsserver 3 gesendeten und dort gespeicherten Daten auch als Backup dienen. Beispielsweise kann der Roboter 1 die Kartendaten seines Einsatzgebietes wieder herstellen, wenn diese korrumpiert wurden, ohne eine erneute Erkundungsfahrt durchzuführen. Ebenso kann ein defekter Roboter durch einen Neuen ersetzt werden. Hierbei erhält der neue Roboter Zugang zu den auf dem Kommunikationsserver 3 gespeicherten Daten, wodurch er eine Karte seiner Umgebung besitzt, ohne diese selber neu aufbauen zu müssen.

Ein autonomer mobiler Serviceroboter 1 erfasst mit seinen zahlreichen Sensoren sensible Daten über sein Einsatzgebiet wie beispielsweise private Daten über das Wohnumfeld des Nutzers. Diese Daten sollen also durch Verfahren wie beispielsweise Verschlüsselung und sichere Authentifizierung beispielsweise mittels TLS-Zertifikate *(Transport Layer Security)* vor unberechtigtem Zugriff Dritter geschützt werden. Gleichzeitig soll aber die Bedienbarkeit des Roboters 1 nicht durch beispielsweise zu viele Passwortabfragen eingeschränkt werden.

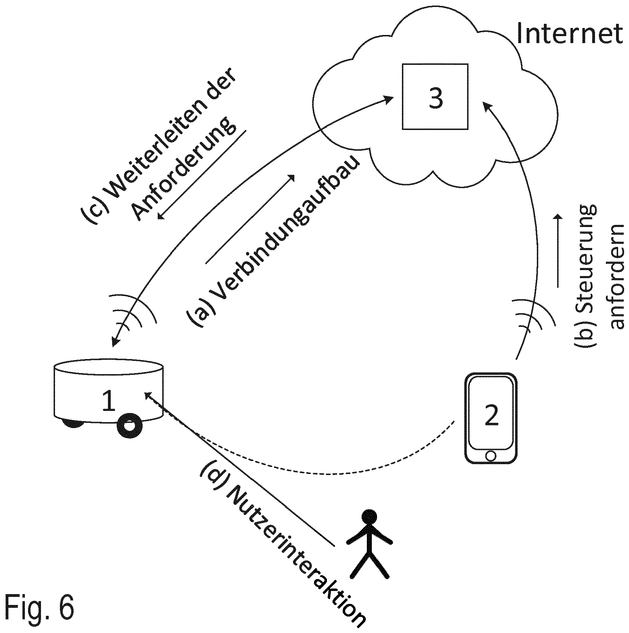

Um eine zusätzliche Sicherheitsebene einzuziehen, welche den Zugriff unberechtigter Personen auf sensible Daten erschwert, kann gemäß einem Beispiel der Erfindung der Nutzer bei der Einrichtung *(set-up)* der Robotersteuerung über den Kommunikationsserver 3 einen Nachweis für die Berechtigung für diesen Zugriff erbringen. Dies kann wie z.B. in Fig. 6 gezeigt durch eine direkte Interaktion mit dem Roboter 1 geschehen, die eine unmittelbare physische Kontrolle des Nutzers über den Roboter 1 (und das mobile Endgerät 2) voraussetzt. Er kann also beispielsweise auf dem Roboter 1 einen Knopf betätigen oder mit einer direkten Drahtlosverbindung kurzer Reichweite (z.B. Bluetooth, Airdrop, NFC, etc.) mit dem Roboter 1 kommunizieren. Durch dieses Verfahren wird ein Zugriff auf die sensiblen Roboterdaten durch eine Person ohne unmittelbaren physischen Zugriff auf den Roboter (Angreifer von außerhalb) erheblich erschwert.

Bei diesem Verfahren für die Einrichtung der Robotersteuerung mittels dem Kommunikationsserver 3 werden gemäß einem speziellen Ausführungsbeispiel die folgenden fünf Schritte durchlaufen:
(a) Der Nutzer ermöglicht dem Roboter 1 eine Verbindung zum Kommunikationsserver 3;
(b) der Nutzer fordert über das mobile Endgerät 2 bei dem Kommunikationsserver 3 die Kontrolle über den Roboter 1 an;
(c) der Kommunikationsserver 3 informiert den Roboter 1 über die Anforderung der Kontrolle;
(d) der Roboter 1 erwartet eine Bestätigung dieser Anforderung mittels einer direkten Nutzerinteraktion (z. B. Betätigung einer Taste die physisch mit dem Roboter verbunden ist); und
(e) bei erfolgreicher Bestätigung durch den Nutzer sendet der Roboter 1 eine Bestätigung der Anfrage an den Kommunikationsserver und erlaubt die Steuerung des Roboters durch das mobile Endgerät über den Kommunikationsserver 3.

Das beschriebene Konzept wird im Folgenden an einem Beispiel weiter verdeutlicht. Im Schritt (a) ermöglicht der Nutzer dem Roboter 1, eine Verbindung zu dem Kommunikationsserver 3 aufzubauen. Dies geschieht beispielsweise, indem er dem Roboter 1 Zugang zu einem an das Internet angeschlossenen WLAN-Router 4 gewährt. Der Roboter 1 meldet sich beispielsweise mit seiner UID *(Unique Identification Number)* beim Kommunikationsserver 3 an, so dass er eindeutig identifizierbar ist.

In Schritt (b) verbindet sich das mobile Endgerät 2 mit dem Kommunikationsserver 3 und teilt diesem mit, dass es eine Verbindung zu dem Roboter 1 wünscht. Dies geschieht beispielsweise, indem der Nutzer eine Kennung des Roboters (z.B. die UID des Roboters 1) und ein zugehöriges Passwort angibt. Diese Informationen findet der Nutzer z.B. in den zum Roboter 1 gehörigen Unterlagen (z.B. *User Manual).* Die UID oder eine andere Kennung des Roboters (z.B. ein digitales Zertifikat) des Roboters kann beispielsweise auch über einer direkten Verbindung (z.B. mittels einer Punkt-zu-Punkt-Funkverbindung wie z.B. über eine Bluetooth-Verbindung oder mittels NFC oder auch über ein WLAN) vom Roboter 1 zum mobilen Endgerät 2 übertragen werden. Ein alternativer "Übertragungsweg" zwischen Roboter 1 und Endgerät 2 kann darin bestehen, dass am Roboter 1 ein 2D-Barcode wie z.B. ein QR-Code (Quick Response Code) beispielsweise auf dessen Unterseite angeordnet ist und der Barcode mit dem Endgerät 2 eingescannt wird. Der Roboter 2 kann auch eine (pseudo-) zufällige Kennung generieren. Soll die Kennung über einen QR-Code übertragen werden, kann dieser z.B. auf einem Display am Roboter angezeigt werden. Zusätzlich ist es z.B. möglich, dass der Nutzer sich mit einem Benutzerkonto auf dem Kommunikationsserver 3 anmeldet.

In Schritt (c) teilt der Kommunikationsserver 3 dem Roboter 1 mit, dass ein mobiles Endgerät 2 eine Verbindung über den Kommunikationsserver 3 mit dem Roboter 1 wünscht. Daraufhin erwartet der Roboter 1 in Schritt vier innerhalb einer festgelegten Zeit eine direkte Nutzerinteraktion. In Schritt (d) gibt es zahlreiche Möglichkeiten einer direkten Nutzerinteraktion mit dem Roboter 1, welche die physische Kontrolle des Roboters durch den Nutzer voraussetzen. Beispielsweise erfolgt die Nutzerinteraktion taktil durch drücken eines Knopfes am Roboter 1 oder das Auslösen eines berührungsempfindlichen Sensors (z. B. *Bumper Switch)* des Roboters 1. Auch das gezielte Auslösen eines anderen Sensors (wie beispielsweise Beschleunigungsmesser, Gyroskop, Radkontaktschalter, Bodensensor, Absturzsensor oder Sensoren zur Messung von Abständen zu Hindernissen) durch den Nutzer durch beispielsweise anheben, anstoßen, verschieben oder rotieren des Roboters ist möglich. Hierzu werden dem Nutzer genauere Anweisungen beispielsweise auf dem mobilen Endgerät angezeigt. Zusätzlich kann beispielsweise der zu betätigende Knopf aufleuchten oder blinken. Wenn die Betätigung durch den Nutzer durch eine vom Roboter detektierbare physische Interaktion zwischen Nutzer und Roboter (z.B. Betätigen eines Tasters, Hochheben des oder Drehen Roboters, etc.) innerhalb des festgelegten Zeitraums erfolgt, sendet der Roboter 1 gemäß Schritt (e) an den Kommunikationsserver 3 eine Bestätigung. Andernfalls wird die Steuerung des Roboters über den Kommunikationsserver 3 mittels des mobilen Endgeräts 2 verweigert. Bei Bestätigung der Verbindung kann nun auf dem Kommunikationsserver 3 in einer Datenbank hinterlegt werden, dass der Nutzer und/oder das mobile Endgerät 2 den Roboter 1 über den Kommunikationsserver 3 steuern darf. Alternativ wird auf dem mobilen Endgerät 2 beispielsweise ein digitales Zertifikat hinterlegt, mittels dessen es beim Kommunikationsserver 3 die Berechtigung der Steuerung des Roboters 1 nachweisen kann.

Die Interaktion zwischen Nutzer und Roboter kann auch darin bestehen, dass der Nutzer mittels einer in dem mobilen Endgerät eingebauten Kamera einen am Roboter angeordneten oder auf einem Display des Roboters angezeigten Code (z.B. Barcode oder QR-Code) einscannt. Der eingescannte Code wird dann über den Server 3 an den Roboter 1 übertragen, der den Code dann verifizieren kann (dazu ist der Code auch in einem nichtflüchtigen Speicher im Roboter abgelegt). Der Code kann z.B. eine für den Roboter eindeutige Identifikationsnummer (UID, z.B. bestehend aus Modell- und Seriennummer) oder ein (pseudo-)zufälliger Code oder ein digitales Zertifikat sein. In diesem Fall muss der Roboter den QR-Code auf einem Display am Roboter anzeigen. Dieser Code ist sinnvollerweise ein anderer als die im oben erläuterten Schritt (b) an den Server übertragene Kennung. Statt eines Codes kann auch mindestens eine Prüfsumme oder ein Hashwert gescannt und übertragen werden.

Eine weitere mögliche direkte Nutzerinteraktion entsprechend Schritt (d) wäre eine kurzreichweitige Kommunikationsverbindung zwischen Roboter 1 und mobilem Endgerät 2. Hierfür können verschiedene Methoden wie beispielsweise eine drahtgebundene Verbindung beispielsweise mittels USB oder eine drahtlose Verbindung beispielsweise mittels Bluetooth, NFC oder Infrarot verwendet werden. In diesem Fall kann beispielsweise der Kommunikationsserver 3 über den Roboter 1 ein digitales Zertifikat an das mobile Endgerät 2 senden, mit dem es in Zukunft beim Kommunikationsserver 3 die Berechtigung der Steuerung des Roboters 1 nachweisen kann. Dazu müsste das Zertifikat z.B. mittels einer Infrarot- oder Bluetooth-Datenverbindung auf den Roboter übertragen werden.

Das eben beschriebene Vorgehen wird vorzugsweise für jeden Roboter 1 und für jeden Nutzer und/oder jedes mobile Endgerät 2 durchgeführt. Bei mehreren Nutzern und/oder mobilen Endgeräten kann es einen Master-Nutzer und/oder ein Master-Endgerät geben, welcher/s für andere authentifizierte Nutzer und/oder Endgeräte die Berechtigung zur Steuerung und Kontrolle des Roboters verwaltet und zuweist. So kann sich beispielsweise ein Nutzer eine Reinigungskarte des Roboters anzeigen lassen, während ein zweiter Nutzer zusätzlich die Berechtigung hat, sich aktuelle durch den Roboter aufgenommene Überwachungsaufnahmen anzeigen zu lassen.

Zu der erwünschten selbstständigen Tätigkeit eines autonomen, mobilen Roboters 1 gehört es, dem Nutzer Informationen über Ergebnisse der vom Roboter durchgeführten Tätigkeiten und mögliche bei der Tätigkeit aufgetretene Probleme mitzuteilen. Beispielsweise kann der Roboter einen Nutzer darüber informieren, dass ein Zimmer aufgrund einer geschlossenen Tür nicht gereinigt werden kann. Diese Information ist für einen Nutzer jedoch nur dann relevant, wenn er diesen Zustand ändern kann. Wenn der Nutzer gerade unterwegs ist (er sich also nicht in der Nähe des Robotereinsatzgebietes befindet) und eine derartige Nachricht ("Tür verschlossen") bekommt, kann der Nutzer zu dieser Zeit nichts an der Situation ändern. Die Nachricht kann sogar störend sein oder es kann sein, dass der Nutzer die Nachricht bis zu seinem Nachhausekommen vergessen hat. Ob und wann eine Information an den Nutzer sinnvoll ist, kann also vom Aufenthaltsort des Nutzers abhängig sein.

Gemäß einem Ausführungsbeispiel wird die Relevanz von Nachrichten danach unterschieden, ob der Nutzer zu Hause ist, unterwegs ist oder nach Hause kommt. Wenn der Nutzer zu Hause ist, interessiert er sich möglicherweise für Benachrichtigungen, wenn der Roboter die Absicht hat eine potenziell für den Nutzer störende Tätigkeit zu beginnen. Dies ist beispielsweise die Reinigung eines Zimmers. Eine weitere interessante Benachrichtigung ist, wenn der Roboter ein Problem (wie z.B. eine geschlossene Tür) detektiert, welches der Roboter nicht selbstständig lösen kann. Wenn der Nutzer nicht zuhause ist, interessiert er sich beispielsweise für Sicherheitshinweise eines Überwachungsroboters oder für schwerwiegende Probleme (Beispielsweise der Roboter kann eine geplante Reinigung nicht beginnen, weil er in einem Zimmer eingesperrt ist oder sich im falschen Stockwerk befindet). Im Falle, dass der Serviceroboter Überwachungsaufgaben durchführt (Nachtwächterfunktion), können bei bestimmten Ereignissen z.B. abhängig davon, ob der Nutzer anwesend ist, unterschiedliche Alarme ausgelöst werden. Wenn der Nutzer abwesend war und nach Hause kommt, interessiert er sich möglicherweise für den Status der Wohnung (beispielsweise das Reinigungsergebnis) und Hinweise auf Probleme, die der Roboter während der Abwesenheit des Nutzers nicht selbstständig lösen konnte.

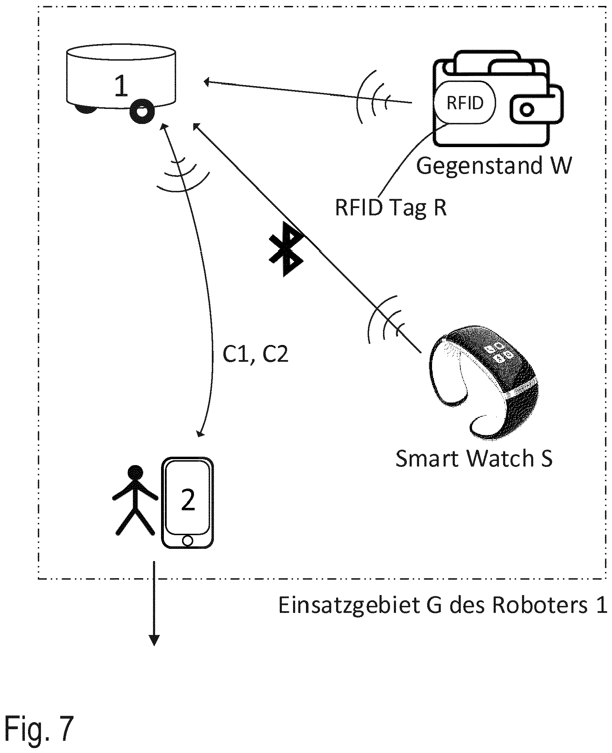

Die Nachrichten des Roboters an den Nutzer können seinen eigenen Funktionsbereich umfassen aber auch darüber hinaus gehen. Zwei Beispiele sind in Fig. 7 dargestellt. So kann der Roboter 1 den Nutzer (der das Endgerät 2 bei sich trägt) beispielsweise beim Verlassen seiner Wohnung an verschieden Dinge erinnern. So kann er ihn darauf aufmerksam machen, wenn ein Haushaltsgerät wie der Herd noch eingeschaltet oder ein Fenster offen ist. Hierbei kann er Aufgaben übernehmen, die alternativ durch aufwändige Sensorik gelöst werden. Weiterhin kann der Roboter den Nutzer beim Verlassen seiner Wohnung darauf aufmerksam machen, dass er einen Gegenstand G vergessen hat, den er normalerweise mit sich führt (wie beispielsweise eine Smartwatch oder ein Portmonee). Dies kann der Roboter 1 mit der Zeit erlernen oder durch den Nutzer eingestellt werden. Hierzu ist der Roboter 1 so eingerichtet, dass er die Anwesenheit oder Position von dem Gegenstand (beispielsweise einer Smartwatch S oder einem Portmonee W) detektieren kann. Beispielsweise im Falle der Smartwatch S kann diese Detektion durch ein aktives Funksignal über beispielsweise Bluetooth erkannt werden. Alternativ kann der Gegenstand (z.B. das Portmonee W) durch einen RFID-Chip R *(RFID Tag)* gekennzeichnet und somit durch den Roboter 1 eindeutig identifiziert und lokalisiert werden. Zur Lokalisierung des Portmonees muss der Roboter gegebenenfalls die Wohnung abfahren. Wenn der Roboter nun feststellt, dass ein Nutzer das Haus ohne Portmonee verlassen hat, so kann er ihm eine entsprechende Nachricht senden. Alternativ kann der Nutzer eine Anfrage an den Roboter stellen, ob ihm die Position des Portmonees bekannt ist. Die Entsprechende Antwort kann hierbei abhängig von der Position des Nutzers sein. Wenn der Nutzer zu Hause ist, so kann der Roboter die genaue Position angeben und/oder den Nutzer sogar zu dem gesuchten Portmonee führen. Wenn der Nutzer unterwegs ist, so ist die Antwort "Das Portmonee liegt zu Hause" vollkommen ausreichend.

Wenn mehrere Nutzer denselben Roboter steuern können sollen, dann kann der Roboter die Anwesenheit aller Nutzer prüfen und eine entsprechende Nachricht an den/die passenden Nutzer senden. Beispielsweise können zwei Personen in einem Haushalt leben, die den Roboter steuern dürfen. Wenn nun der Roboter 1 ein Problem wie eine verschlossene Tür detektiert, welches er nicht alleine lösen kann, so prüft er, welche der beiden Personen zuhause ist und informiert gezielt diese Person, indem er eine Nachricht an das Endgerät dieser Person sendet.

Mit den zuvor beschriebenen Verbindungsarten (siehe Fig. 1 bis 3) zwischen einem Roboter 1 und einem mobilen Endgerät 2 (d.h. drahtlose Direktverbindungen als auch Verbindungen über einen Router oder einem nur über das Internet zugänglichen Kommunikationsserver 3 außerhalb des lokalen Netzwerks), wird gemäß manchen Ausführungsbeispielen auf einfache Art eine Abschätzung des Standorts des Nutzers vorgenommen. So kann aus der Art einer Verbindung (lokal oder über den Kommunikationsserver) geschlossen werden, ob der Nutzer mit seinem mobilen Endgerät 2 zu Hause ist oder nicht. Besteht eine Verbindung zwischen Roboter 1 und Endgerät 2 über den Kommunikationsserver 3, ist der Nutzer unterwegs. Umgekehrt ist eine direkte Verbindung zu einem mobilen Endgerät 2, welches der Nutzer normalerweise mit sich führt, ein Hinweis darauf, dass der Nutzer zu Hause ist. Aus dem Wechsel zwischen direkter Verbindung und Nutzung des Kommunikationsservers 3, kann also erkannt werden ob der Nutzer sein Haus verlässt oder gerade ankommt.

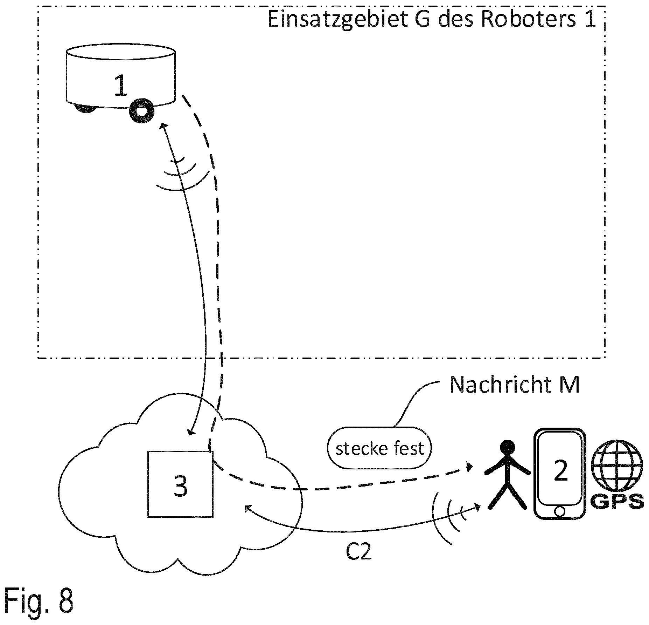

In einigen Fällen kann es nützlich sein, weitere Informationen über den Aufenthaltsort des Nutzers auszuwerten. Hierzu ist ein Beispiel in Fig. 8 dargestellt. Demnach kann der Nutzer z.B. im Garten seines Hauses sein, in welchen die direkte Verbindung (vgl. Fig. 4, Verbindung C1) nicht reicht, wodurch eine Verbindung über den Kommunikationsserver 3 aufgebaut wird. Durch Auswertung von in mobilen Endgeräten 2 häufig verfügbaren Geokoordinaten (ermittelt z.B. durch GPS, *Global Positioning System)* des mobilen Endgeräts 2 kann z.B. ermittelt werden (durch den Roboter 1 oder durch den Kommunikationsserver 3), dass der Nutzer sich in unmittelbarer Nähe des Einsatzgebietes G des Roboters 1 befindet und eine entsprechende Information kann erfolgen. Im vorliegenden Fall sendet der Roboter 1 eine Nachricht M an das Endgerät, um den Nutzer zu informieren, dass ein Problem besteht, z.B. dass der Roboter stecken geblieben ist. GPS steht hier stellvertretend für alle Satellitennavigationssysteme (wie z.B. GLONASS, Galileo, Beidou, etc.). Auch andere Methoden, die Geokoordinaten des mobilen Endgeräts 2 zu bestimmen (z.B. Triangulation von Mobilfunkmasten, GSM-Ortung), sind möglich. Das mobile Endgerät kann z.B. seine GPS-Position regelmäßig an den Server 3 schicken, und der Roboter kann die Position des Endgerätes 2 vom Server 3 abfragen. Alternativ, kann der Server 3 eine Abfrage der GPS-Position an das Endgerät 3 weiterleiten und die zugehörige Antwort wiederum an den Roboter 1 weiterleiten.

Neben der Auswertung der Verbindungsarten gibt es noch weitere Möglichkeiten, die Anwesenheit eines Nutzers oder auch anderer Personen (z.B. ein Kind, eine unbefugte Person, etc.) festzustellen. Beispielsweise kann der Roboter hierfür Sensoren wie beispielsweise eine Kamera oder ein Mikrofon nutzen, um Bewegungen einer Person wahrzunehmen. Bei einer kamerabasierten Detektion können z.B. Algorithmen zur Gesichtserkennung eingesetzt werden. Des Weiteren kann bei Endgeräten, welche der Nutzer normalerweise nicht mit sich führt, welche aber zur Steuerung und Kontrolle des Roboters genutzt werden (beispielsweise (Smart- )Fernseher, PC, eventuell Tablet-PC), die Nutzungsaktivität überprüft werden, und auf Basis dieser entschieden werden, ob eine Information an das mobile Endgerät 2 übermittelt wird. Auch mit Hilfe anderer Geräte wie einer Alarmanlage kann die Anwesenheit eines Nutzers bestimmt werden. Durch die zunehmende Vernetzung verschiedenster Geräte in einem Haushalt (IoT, *Internet of Things)* kann der Roboter auch Nutzungsdaten von beispielsweise einem anderen Roboter, einer Kaffeemaschine, einem Herd, elektrischen Jalousien aber auch Fitness- und Gesundheitstrackern nutzen. So kann ein Kommando des Nutzers an ein Gerät ein Indiz dafür sein, dass er das Haus verlassen will. Beispielsweise kann er sich von einem Transportroboter Straßenschuhe bringen lassen. Der Transportroboter teilt diesen Befehl mit einem zweiten Roboter, der zur Überwachung und/oder Reinigung des Hauses genutzt wird, woraufhin dieser selbsttätig eine der zuvor beschriebenen Inspektionen auf vergessene Dinge, offene Fenster u.s.w. durchführt. Ein Reinigungsroboter könnte zusätzlich prüfen ob alle zu reinigenden Gebiete zugänglich sind, und gegebenenfalls den Nutzer auf eine geschlossene Tür hinweisen, bevor der Nutzer das Haus verlässt.

Der mobile Roboter 1 kann auf einfache Art eine Nachricht an den Nutzer senden, wenn eine Verbindung zum mobilen Endgerät 2 besteht. Wenn keine direkte drahtlose Verbindung besteht, kann der Roboter auf andere Nachrichtenservices wie beispielsweise E-Mail, SMS oder Push-Service wie beispielsweise den *Apple Push Notification Service* oder das *Google Cloud Messaging* zurückgreifen. Dieser Benachrichtigungsweg kann direkt vom Roboter 1 initiiert werden oder alternativ auch durch den Kommunikationsserver 3.

Beispielsweise kann der Roboter zuerst versuchen dem mobile Endgerät über eine direkte Verbindung eine Nachricht zu senden. Wenn dies nicht funktioniert, kann diese an den Kommunikationsserver gesandt werde. Der Kommunikationsserver kann nochmals versuchen diese Nachricht direkt an das mobile Endgerät zu senden. Beispielsweise wartet er hierfür eine vorgegebene Zeit, dass sich das mobile Endgerät mit ihm in Verbindung setzt. Nach Ablauf dieser Zeit kann der Kommunikationsserver beispielsweise eine Push-Benachrichtigung oder eine SMS senden.

Gemäß einem Ausführungsbeispiel kann der Roboter, nachdem der Nutzer das Haus verlassen hat, gezielt kontrollieren, ob Fenster und Haustüren geschlossen und/oder Elektrogeräte abgeschaltet sind, und sie gegebenenfalls selbsttätig schließen oder die Elektrogeräte abschalten und/oder den Nutzer über einen kritischen Zustand informieren (wie im vorhergehenden Abschnitt beschrieben).Wenn der Nutzer heim kommt, kann der Roboter in den Flur fahren, um ihn zu begrüßen und zu unterhalten oder seine Hausschuhe zu bringen. Nachdem der Nutzer den Flur wieder verlassen hat, kann der Roboter eine Reinigung des Flurs starten, um eine durch Straßenschuhe hereingetragene Verschmutzung zu beseitigen. Hierzu versucht der Roboter zu detektieren, ob der Nutzer den Flur verlassen hat, oder er wartet eine zuvor definierte Zeit ab. Eine weitere Möglichkeit ist ein Transportroboter, der dem nachhause kommenden Nutzer anbietet, eventuell getätigte Einkäufe in beispielsweise die Küche zu transportieren.

Für die Realisierung all dieser Beispiel kann es von Vorteil sein, dass der autonome mobile Roboter eine Karte seines Einsatzgebiets hat, mit der er gut durch das Einsatzgebiet navigieren kann. Mit bestimmten Positionen oder Teilgebieten des Robotereinsatzgebiets können eine bestimmte Aktionen verknüpft werden, die ausgelöst werden, wenn ein Nutzer das Haus erreicht oder verlässt. Die Verknüpfung des Gebiets mit einer entsprechenden Aktion, kann durch den Nutzer vorgenommen werden. Um den Nutzwert weiter zu verbessern, kann der Roboter dazu ausgebildet sein, selbsttätig die relevanten Bereiche zu erkennen und abzuspeichern. So kann ein Nutzer einstellen, dass er beispielsweise zu Unterhaltungszwecken von seinem Roboter begrüßt (Verknüpfung "Flur" mit Aktion "Begrüßung" beim Ereignis "Nutzer kommt nach Hause") wird und/oder eine Tätigkeit wie den Transport von Einkäufen anbietet, wenn er nach Hause kommt. Die für diese Aufgabe relevanten Bereiche kann der Roboter nun erlernen oder durch Interpretation anhand vorgebbarer Kriterien aus einer Karte ableiten.

Beispielsweise kann die Karte des Einsatzgebiets durch den Roboter in Teilgebiete unterteilt worden sein, welche beispielsweise den Zimmern einer Wohnung entsprechen. Diesen Teilgebieten kann der Nutzer Bezeichnungen *(tags)* wie "Wohnzimmer", "Küche" oder "Flur" zugeteilt haben. Weitere Methoden, anhand derer der Roboter die Funktion eines Gebiets erkennen kann, sind an sich bekannt (z.B. identifizieren von typischen Gegenständen mittels Bildverarbeitung). Für die Begrüßung des heimkommenden Nutzers kann der Roboter nun das mit "Flur" benannte Teilgebiet anfahren.

Alternativ kann der Roboter erlernen, wo der Ein- und Ausgangsbereich für Nutzer in seinem Einsatzgebiet liegt. So kann der Roboter beispielsweise bei einer ersten Erkundungsfahrt durch das Einsatzgebiet (bei der die Karte aufgebaut wird) detektieren (beispielsweise durch Information eines mobilen Endgeräts), dass der Nutzer nach Hause kommt. Daraufhin wird der Roboter den Nutzer innerhalb seines Einsatzgebiets suchen. Die Position, an der der Roboter den Nutzer schließlich entdeckt, wird abgespeichert. In einem nächsten Durchlauf kann der Roboter als erstes die abgespeicherte Position anfahren, wodurch er deutlich schneller den Nutzer finden wird. Die Position, an der der Roboter den Nutzer entdeckt, wird erneut abgespeichert. Nach einigen Wiederholungen wird die so ermittelte und abgespeicherte Position recht gut den Ein- und Ausgangsbereich beschreiben. Diese Information kann er mit anderen Robotern teilen.

Wenn der Roboter detektiert, das ein Nutzer das Robotereinsatzgebiet erreicht oder verlässt, kann es vorkommen, dass er gerade mit einer anderen Tätigkeit beschäftigt ist. In diesem Fall muss der Roboter prüfen, ob er diese Tätigkeit unterbricht, um die neue Tätigkeit durchzuführen. Beispielsweise kann der Roboter die Aufgabe haben, den Flur zu reinigen, nachdem der Nutzer nach Hause kam. Wenn nun der Roboter gerade seinen Akku auflädt, kann es sinnvoller sein, die Reinigung aufzuschieben bis der Akku vollständig geladen ist. In anderen Fällen ist eine Verschiebung nicht sinnvoll, weshalb die Aufgabe ganz unterlassen wird. So könnte beispielsweise der Reinigungsroboter sich in einem anderen Stockwerk befinden und so den Flur nicht erreichen können. Darüber hinaus kann der Roboter den Start, die Verschiebung oder die Unterlassung einer Aktion auch davon abhängig machen, ob weitere Nutzer des Roboters im Haus an- oder abwesend sind.

Es gibt Roboter, die beispielsweise Kartendaten auf einen externen Computer oder in einen Cloudservice auslagern. Wenn die Verbindung zu dem Computer abreißt, können sie jedoch ihre Aufgabe nicht mehr verrichten. Um eine autonome Arbeitsweise des Roboters zu garantieren, werden alle Daten, die der Roboter für die Durchführung seiner bestimmungsgemäßen Aufgabe benötigt, wie beispielsweise Kartendaten zur Navigation aber auch Verbindungsdaten zu lokalen Netzwerken im Roboter gespeichert. In ähnlicher Weise können auch benutzerspezifische Daten auf dem Roboter gespeichert werden und so von verschieden Endgeräten aus verfügbar sein. Beispielsweise kann der Nutzer seinen Roboter mit Hilfe eines ersten Endgeräts wie beispielsweise einem Tablet-PC einrichten. Beispielsweise kann der Benutzer mit dem Tablet-PC dem Roboter einen Namen zuweisen, Kalendereinträge für zukünftige Aufgaben des Roboters eintragen oder die Kartendaten durch Benennen von Gebieten und Teilgebieten (z. B. benennen von Räumen als "Wohnzimmer", "Schlafzimmer") und dem Definieren von Sperrgebieten personalisieren. Wenn der Nutz nun beispielsweise von unterwegs den Roboter mit einem anderen mobilen Endgerät (wie z.B. einem Smartphone) überwachen und steuern will, so sollen diese personalisierten Daten ebenfalls verfügbar sein. Eine verbreitete Lösung ist, diese Daten in einem Cloud-Speicher zu speichern, und so dem Nutzer von verschieden Geräten verfügbar zu machen. Allerdings ist dann die Steuerung und Kontrolle des Roboters abhängig von einer Internetverbindung des mobilen Endgeräts. Gemäß den hier beschriebenen Ausführungsbeispielen können die personalisierten Daten deshalb ebenfalls auf dem Roboter gespeichert werden und sind somit von jedem Endgerät, welches sich mit dem Roboter verbinden kann, zugänglich.

Darüber hinaus kann es auch vorkommen, dass mehrere Nutzer einen Roboter nutzen. In diesem Fall kann es vorteilhaft sein, eine Nutzerverwaltung auf dem Roboter einzurichten, die verschiedene Geräte und Nutzer handhaben kann. Beispielsweise kann die Nutzerverwaltung eine Priorisierung von Nutzern und/oder Geräten vornehmen, die zur selben Zeit auf dem Roboter Änderungen vornehmen wollen. Beispielsweise kann ein erster Nutzer dem Roboter über den Kommunikationsserver mitteilen, dass er reinigen soll. Einen zweiten Nutzer, der zu dieser Zeit zu Hause ist, kann sich hierdurch gestört fühlen und deshalb dem Roboter über eine lokale Verbindung zu seiner Basis schicken. In diesem Fall würde die Anweisung über das lokale Netzwerk eine höhere Priorität erhalten und ausgeführt werden. Der erste Nutzer wird gegebenenfalls hierüber informiert.

Des Weiteren können den Nutzern verschiedene Berechtigungen erteilt werden. So kann beispielsweise ein Nutzer in einem Zeitplan (Kalenderfunktion) dem Roboter Aufgaben zuweisen, während ein zweiter nur die geplanten Zeiträume betrachten kann. Weiterhin kann bei einem Kalendereintrag gespeichert werden, welcher Nutzer diesen Eintrag veranlasst hat. Wenn der Eintrag von einem weiteren Nutzer geändert wird, so erhält der erste Nutzer eine Information hierüber. Gegebenenfalls kann er die Änderung bestätigen oder widerrufen.

Bei verschiedenen Nutzern und/oder Endgeräten kann auf dem Roboter eingestellt werden, welche Nutzer und/oder Endgeräte über ein bestimmtes Ereignis informiert werden. Weiterhin kann eingestellt werden, welche mobilen Endgeräte genutzt werden können, um die Position eines Nutzers zu bestimmen, um die oben beschriebenen positionsabhängigen (vom Aufenthaltsort des Nutzers abhängigen) Benachrichtigungen zu senden. Beispielsweise wird hierfür eine Smartwatch oder ein Smartphone, welche der Nutzer normalerweise bei sich trägt, genutzt, wohingegen ein Tablet-PC, welches häufig zu Hause gelassen wird, ignoriert wird.

Bei der Verwendung von mehreren Robotern in einem Haushalt, tauschen sich die zwei oder mehr Roboter über die persönlichen Einstellungen des Nutzers aus. So muss der Nutzer nur einmal die Karte eines ersten Roboters beispielsweise durch benennen von Gebieten und Teilgebieten personalisieren. Anschließend teilt der erste Roboter einem zweiten Roboter diese personalisierten Kartendaten mit. Dies geschieht beispielsweise über eine direkte drahtlose Verbindung wie Bluetooth oder über ein lokales Netzwerk wie beispielsweise ein WLAN. Der Austausch der Kartendaten zwischen den Robotern ermöglicht eine generelle Verbesserung der Kartendaten die einem Roboter zur Verfügung stehen. Beispielsweise können in einer Wohnung ein Saugroboter und ein Wischroboter eingesetzt werden, wobei der Wischroboter beispielsweise einen Teppich nicht befährt. Durch den Austausch der Kartendaten erhält der Wischroboter zusätzliche Informationen über seine Umgebung. Darüber hinaus kann er dem Nutzer die gleiche Karte wie der Saugroboter anzeigen. Des Weiteren kann der Saugroboter den Wischroboter über einen Nutzerbefehl zur Reinigung der Wohnung informieren und zusätzlich mitteilen, welche wischbaren Flächen er bereits gesaugt hat.

Gleichzeitig können hierdurch die Roboter sich gegenseitig als Backup nutzen, wodurch ein leichter Austausch eines defekten Roboters ermöglicht wird. Beispielsweise wird in einem Haus mit zwei Etagen in jeder Etage ein Roboter eingesetzt. Durch den Austausch der Kartendaten kann beispielsweise der Roboter aus der ersten Etage ohne zusätzliche Erkundungsfahrt direkt in der zweiten Etage eingesetzt werden. Beispielsweise ein durch den Nutzer neu erworbener Roboter kann die Karten- und weitere Daten von einem schon im Haushalt eingesetzten Roboter erhalten, wodurch der benötigte Aufwand zum Einrichten eines Roboters deutlich reduziert wird. Beispielsweise entfällt so eine Erkundungsfahrt, in der der Roboter sein Einsatzgebiet kennenlernt um eine Karte aufzubauen.

Bei Verwendung eines Kommunikationsservers kann dieser natürlich genutzt werden, um zusätzliche Daten, die nicht unmittelbar für die Durchführung einer Aufgabe durch einen Roboter notwendig sind, abzuspeichern. Beispielsweise kann der Roboter Daten über den Verlauf seiner Tätigkeit für einen vorgegebenen Zeitraum bereithalten. Durch den begrenzten Speicher eines Roboters ist dieser Zeitraum stark beschränkt. Um diesen Zeitraum zu erweitern oder um einzelne Ereignisse dauerhaft zu speichern kann der Kommunikationsserver oder ein Cloud-Speicher genutzt werden. Darüber hinaus kann der Server ebenfalls für ein Backup des Roboters genutzt werden, was insbesondere bei der Nutzung nur eines Roboters die zuvor beschriebenen Vorteile eines Backups bietet.

Die hier beschriebenen Ausführungsbeispiele werden im Folgenden zusammengefasst. Bei der folgenden Liste mit 48 Elementen handelt es sich nicht um eine vollständige Aufzählung wesentlicher technischer Merkmale, sondern um eine lediglich exemplarische Zusammenfassung:
Beispiel 1: System, das aufweist:
   einen autonomen. mobilen Roboter (1);
   ein mobiles Endgerät (2);
   wobei der Roboter (1) und das mobile Endgerät (2) dazu ausgebildet sind, über mindestens eine erste drahtlose Verbindung zu kommunizieren; und
   wobei der Roboter (1) dazu ausgebildet ist, Information über den Aufenthaltsort eines Nutzers zu ermitteln und abhängig von der ermittelten Information über den Aufenthaltsort zu entscheiden, ob und, wenn ja, welche Informationen an das mobile Endgerät gesendet werden und/oder ob und, wenn ja, welche Tätigkeiten von dem Roboter ausgeführt, unterbrochen, fortgesetzt oder beendet werden.
Beispiel 2: Das System gemäß Beispiel 1,
   wobei die Information über den Aufenthaltsort des Nutzers dadurch ermittelt werden, dass Information über die Position des mobilen Endgeräts (2) ermittelt werden.
Beispiel 3: Das System gemäß Beispiel 2,
   wobei der Roboter (1) anhand der Tatsache, ob eine Kommunikation über die erste Verbindung möglich ist, ermittelt, ob das Endgerät (2) sich im Einsatzgebiet des Roboters (1) befindet.
Beispiel 4: Das System gemäß einem Beispiel 2 oder 3,
   bei dem das mobile Endgerät dazu ausgebildet ist, seine eigene Position, insbesondere als Geokoordinaten, zu ermitteln, und diese über die erste drahtlose Verbindung oder über eine zweite drahtlose Verbindung an den Roboter zu übertragen.
Beispiel 5: Das System gemäß einem der Beispiele 2 bis 4,
   das mindestens ein weiteres mobiles Endgerät aufweist, und Information über die Position eines jeden der Endgeräte ermittelt wird.
Beispiel 6: Das System gemäß Beispiel 5,
   bei dem anhand der Information über die Position der mobilen Endgeräte ermittelt wird, welche mobilen Endgeräte sich im Einsatzgebiet des Roboters oder dessen Nähe befinden,
   wobei an die Endgeräte gesendete Benachrichtigungen davon abhängen, ob sie sich im Einsatzgebiet des Roboters oder dessen Nähe befinden.
Beispiel 7: Das System gemäß einem der Beispiele 1 bis 6,
   bei dem der Roboter mit anderen Geräten im Robotereinsatzgebiet verbunden ist und mit diesen kommunizieren kann, und
   wobei der Roboter (1) anhand der Tatsache, ob die anderen Geräte eine Nutzeraktivität an ihn melden, ermittelt, ob sich ein Nutzer im Einsatzgebiet des Roboters (1) befindet.
Beispiel 8: Das System gemäß einem der Beispiele 1 bis 7,
   bei dem der Roboter Sensoren aufweist, um Hindernisse zu detektieren, und
   wobei der Roboter (1) anhand der Tatsache, ob sich bewegende Hindernisse detektiert werden, ermittelt, ob sich ein Nutzer im Einsatzgebiet des Roboters (1) befindet.
Beispiel 9: Das System gemäß einem der Beispiele 1 bis 8,
   bei dem der Roboter eine Kamera aufweist, und
   wobei der Roboter (1) anhand der Tatsache, ob auf einem Kamerabild mittels Bildverarbeitung eine Person oder eine bestimmte Person detektiert wird, ermittelt, ob sich ein Nutzer oder eine andere Person im Einsatzgebiet des Roboters (1) befindet.
Beispiel 10: Das System gemäß einem der Beispiele 1 bis 9,
   wobei der Roboter (1) dazu ausgebildet ist, anhand der Information über den Aufenthaltsort eines Nutzers zu detektieren, ob der Nutzer das Robotereinsatzgebiet verlässt oder betritt, verlassen oder betreten hat oder dabei ist, es zu verlassen oder zu betreten.
Beispiel 11: Das System gemäß 10,
   wobei der Roboter dazu ausgebildet ist, bestimmte Gegenstände in seinem Einsatzgebiet zu detektieren, und dem Nutzer eine Nachricht zu senden, wenn er das Robotereinsatzgebiet verlässt, verlassen hat oder dabei ist, es zu verlassen, und wenn ein Gegenstand detektiert wurde.
Beispiel 12: Das System gemäß 10,
   wobei der Roboter dazu ausgebildet ist, den Zustand von bestimmten Gegenständen und/oder Geräten in seinem Einsatzgebiet zu detektieren, und dem Nutzer eine Nachricht zu senden, wenn er das Robotereinsatzgebiet verlässt, verlassen hat oder dabei ist, es zu verlassen, und wenn ein bestimmter Zustand eines bestimmten Gegenstands oder Geräts detektiert wurde.
Beispiel 13: Autonomer mobiler Roboter, der aufweist:
   ein Navigationsmodul, welches dazu ausgebildet ist, anhand einer Karte des Einsatzgebiets des Roboters und im Roboter verfügbaren Sensorinformationen den Roboter durch das Einsatzgebiet zu navigieren;
   eine Detektionseinheit, welche dazu ausgebildet ist, zumindest eines der folgenden Ereignisse zu detektieren: der Nutzer betritt oder verlässt das Einsatzgebiet, hat es betreten oder verlassen oder ist gerade dabei, das Einsatzgebiet zu betreten oder zu verlassen;
   ein Steuerungsmodul, welches dazu ausgebildet ist, eine vordefinierte Aktion des Roboters auszulösen, wenn die Detektionseinheit eines der Ereignisse detektiert, wobei die vordefinierte Aktion darin besteht, dass der Roboter zu einem vorab in der Karte definierten Ort fährt und dort eine vorab definierte Tätigkeit beginnt.
Beispiel 14: Autonomer mobiler Roboter gemäß Beispiel 13,
   wobei der in der Karte definierte Ort von dem Roboter selbsttätig ermittelt wird, indem er die Benennung von Teilgebieten des Robotereinsatzgebietes analysiert oder indem der Roboter mittels Sensorinformationen ermittelt, an welcher Stelle des Robtereinsatzgebiets ein Nutzer dieses üblicherweise betritt oder verlässt.
Beispiel 15: System, das aufweist:
   einen ersten und mindestens einen zweiten autonomen mobile Roboter, die dazu ausgebildet sind, miteinander zu kommunizieren,
   wobei der erste Roboter dazu ausgebildet ist, eine erste Tätigkeit auszuführen, und der zweite Roboter dazu ausgebildet ist, eine zweite Tätigkeit auszuführen,
   wobei zumindest der erste Roboter dazu ausgebildet ist, zu detektieren, ob ein Nutzer das Robotereinsatzgebiet verlässt oder betritt, und
   wobei der erste Roboter den zweiten Roboter benachrichtigt, wenn er detektiert hat, dass ein Nutzer das Robotereinsatzgebiet verlässt oder betritt, und der zweite Roboter dazu ausgebildet ist, basierend auf dieser Benachrichtigung zu entscheiden, die zweite Tätigkeit zu starten, mit Zeitverzögerung zu starten, zu unterbrechen und/oder abzubrechen.
Beispiel 16: System, das aufweist:
   einen ersten und mindestens einen zweiten autonomen, mobilen Roboter, die dazu ausgebildet sind, miteinander zu kommunizieren,
   wobei der erste Roboter dazu ausgebildet ist, eine erste Tätigkeit auszuführen, und der zweite Roboter dazu ausgebildet ist, eine zweite Tätigkeit auszuführen,
   wobei zumindest der erste Roboter dazu ausgebildet ist, ein Kommando eines Nutzers entgegenzunehmen eine Tätigkeit zu starten, zu unterbrechen und/oder abzubrechen, und
   wobei der erste Roboter den zweiten Roboter über das Kommando des Nutzers benachrichtigt und der zweite Roboter dazu ausgebildet ist, basierend auf dieser Benachrichtigung zu entscheiden, die zweite Tätigkeit zu starten, mit Zeitverzögerung zu starten, zu unterbrechen und/oder abzubrechen.
Beispiel 17: System gemäß Beispiel 16,
   wobei die erste Tätigkeit Staubsaugen und die zweite Tätigkeit Wischen einer Bodenfläche ist.
Beispiel 18: System gemäß Beispiel 16 oder 17, wobei das Kommando eines Nutzers automatisch von einem mobilen Endgerät des Nutzers gesendet wird, wenn dieser das Einsatzgebiet des Roboters verlässt oder dieses betritt.
Beispiel 19: System, das folgendes aufweist:
   mindestens einen mobilen autonomen Roboter (1);
   mindestens ein mobiles Endgerät (2) zur Steuerung des Roboters (1);
   mindestens einen Kommunikationsserver (3), der über eine Netzwerkschnittstelle mit Zugang zum öffentlichen Internet verfügt,
   wobei der Roboter (1) und das mobile Endgerät (2) dazu ausgebildet sind, sowohl über eine erste Verbindung als auch über mindestens eine zweite Verbindung zu kommunizieren, und wobei die zweite Verbindung eine lokale drahtlose Kommunikationsverbindung und die erste Verbindung eine indirekte Kommunikationsverbindung ist, bei der der Kommunikationsserver (3) die Kommunikation zwischen dem Roboter (1) und dem mobilen Endgerät (2) vermittelt, und
   wobei - wenn eine der beiden Verbindungen abreißt oder ein Aufbau der jeweiligen Kommunikationsverbindung fehlschlägt - versucht wird, die Kommunikationsverbindung zu wechseln.
Beispiel 20: System gemäß Beispiel 19,
   bei dem die lokale drahtlose Kommunikationsverbindung zwischen dem Roboter (1) und dem mobilen Endgerät (2) mittels eines lokalen WLAN-Netzwerks im Einsatzgebiet des Roboters (1) hergestellt wird, und bei dem die Verbindung von dem mobilen Endgerät (2) zu dem Kommunikationsserver (3) über das öffentliche Internet erfolgt.
Beispiel 21: System gemäß Beispiel 20,
   bei dem das mobile Endgerät (2) eine Netzwerkkennung jenes WLAN-Netzwerks oder jener WLAN-Netzwerke speichert, über das bzw. über die eine Verbindung zu dem Roboter (1) möglich ist, und wobei das mobile Endgerät (2) nur in dem gespeicherten WLAN-Netzwerk oder den gespeicherten WLAN-Netzwerken selbsttätig versucht, eine Verbindung zu einem Roboter (1) aufzubauen.
Beispiel 22: System gemäß einem der Beispiele 19 bis 21,
   bei dem das mobile Endgerät (2) - wenn eine Kommunikationsverbindung zum Roboter (2) nur über die erste Verbindung besteht - in regelmäßigen Abständen prüft, ob eine Kommunikationsverbindung über die zweite Verbindung möglich ist,
   wobei - sofern möglich - die Kommunikationsverbindung von der ersten Verbindung auf die zweite Verbindung gewechselt wird.
Beispiel 23: System gemäß einem der Beispiele 19 bis 22,
   bei dem das mobile Endgerät (2) dazu ausgebildet ist, den Nutzer zu benachrichtigen, wenn die Kommunikationsverbindung gewechselt wird.
Beispiel 24: System gemäß einem der Beispiele 19 bis 23,
   bei dem das mobile Endgerät (2) dazu ausgebildet ist, den Roboter (1) zu benachrichtigen, wenn die Kommunikationsverbindung gewechselt wird, oder
   bei dem der Roboter (1) dazu ausgebildet ist, einen Wechsel der Kommunikationsverbindung zu detektieren.
Beispiel 25: System gemäß einem der Beispiele 19 bis 24,
   bei dem der Roboter (1) dazu ausgebildet ist, dem Kommunikationsserver (3) mindestens einen Verbindungsparameter mitzuteilen, welche für den Aufbau der zweiten Verbindung nötig sind.
Beispiel 26: System gemäß Beispiel 25,
   bei dem der mindestens eine Verbindungsparameter eine Netzwerkkennung eines lokalen WLAN-Netzwerkes ist, über das der Roboter (1) die zweite Verbindung aufbauen kann.
Beispiel 27: System gemäß einem der Beispiele 19 bis 26,
   bei dem der Roboter (3) dazu ausgebildet ist, bei einem Wechsel der Kommunikationsverbindung anhand vorgegebener Kriterien zu prüfen, ob er seinen Status ändern soll.
Beispiel 28: System gemäß Beispiel 27,
   wobei eine Änderung des Status in dem Starten oder Beenden oder Unterbrechen einer Servicetätigkeit des Roboters (3) besteht.
Beispiel 29: System gemäß einem der Beispiele 19 bis 28,
   bei dem der Kommunikationsserver (3) dazu ausgebildet ist, einen Status des Roboters (1) abzufragen, entsprechende Statusmitteilungen des Roboters (1) zu empfangen und Informationen betreffend den Status des Roboters (1) zu speichern,
   wobei die gespeicherten Informationen betreffend den Status des Roboters (1), insbesondere auf Anfrage des mobilen Endgerätes (2), an das mobile Endgerät (2) übertragen werden.
Beispiel 30: System gemäß einem der Beispiele 19 bis 29,
   bei dem der Roboter (1) ein Speichermodul aufweist, in dem der Roboter ein erstes Ereignisprotokoll speichert, welches Ereignisse über einen ersten Zeitraum umfasst;
   wobei der Roboter (1) dazu ausgebildet ist, das erste Ereignisprotokoll dem Kommunikationsserver (3) zur Verfügung zu stellen, und
   wobei der Kommunikationsserver (3) dazu ausgebildet ist, die in dem ersten Ereignisprotokoll enthaltenen Ereignisse in einem zweiten Ereignisprotokoll zu speichern, welches Ereignisse über einen zweiten Zeitraum umfasst, der gleich lang oder länger ist, als der erste Zeitraum.
Beispiel 31: System gemäß Beispiel 30,
   bei dem der Kommunikationsserver (3) dazu ausgebildet ist, das zweite Ereignisprotokoll an das mobile Endgerät (2) zu übertragen.
Beispiel 32: System gemäß einem der Beispiele 19 bis 31,
   bei dem der Kommunikationsserver (3) dazu ausgebildet ist, in regelmäßigen Zeitabständen und/oder nach Aufforderung durch das mobile Endgerät (2) Abfragen an den Roboter (1) zu senden und die daraufhin vom Roboter (1) an den Kommunikationsserver (3) gesendeten Daten zwischenzuspeichern,
   wobei die zwischengespeicherten Daten an das mobile Endgerät (2) weitergeleitet werden.
Beispiel 33: System gemäß Beispiel 32,
   wobei die in regelmäßigen Zeitabständen abgefragten Daten den Status des Roboters (1) betreffen und die nach Aufforderung durch das mobile Endgerät (2) abgefragten Daten den Zeitplan des Roboters und Antworten auf Steuerbefehle betreffen.
Beispiel 34: System gemäß Beispiel 32 oder 33,
   wobei die Zeitabstände vom aktuellen Status des Roboters abhängen.
Beispiel 35: Verfahren zur Kommunikation zwischen einem mobilen Endgerät (2) und einem mobilen autonomen Roboter (1); das Verfahren weist auf:
   Aufbau einer Kommunikationsverbindung zwischen dem Roboter (1) und dem mobilen Endgerät (2) über eine erste Verbindung oder eine zweite Verbindung, wobei die zweite Verbindung eine lokale drahtlose Kommunikationsverbindung und die erste Verbindung eine indirekte Kommunikationsverbindung ist, bei der ein über das Internet erreichbarer Kommunikationsserver (3) die Kommunikation zwischen dem Roboter (1) und dem mobilen Endgerät (2) vermittelt, und
   Wechseln der Kommunikationsverbindung von der zweiten Verbindung auf die erste Verbindung, wenn die zweite Verbindung abreißt oder der Aufbau der zweiten Verbindung fehlschlägt.
Beispiel 36: Verfahren zur Kopplung eines Endgerätes (2) mit einem mobilen autonomen Roboter (1); das Verfahren weist folgendes auf:
   der Roboter (1) initiiert eine Kommunikationsverbindung zu einem Server (3);
   das mobile Endgerät (2) sendet eine Anfrage an den Server (3);
   der Server (3) informiert mittels einer Nachricht den Roboter (1) über die Anfrage des Endgeräts (2);
   der Roboter (1) wartet auf eine bestimmte Nutzerinteraktion, mittels der die Anfrage durch den Nutzer bestätigt wird;
   wenn die Nutzerinteraktion innerhalb einer vorgegebenen Zeit erfolgt, führt der Roboter (1) Steuerkommandos, die von dem Endgerät (2) über den Server (3) an den Roboter gesendet werden, aus, andernfalls wird eine Steuerung des Roboters über die Kommunikationsverbindung zu dem Server (3) verweigert.
Beispiel 37: Verfahren gemäß Beispiel 36,
   wobei die bestimmte Nutzerinteraktion einen physischen Kontakt zwischen Nutzer und Roboter (1) erfordert.
Beispiel 38: Verfahren gemäß Beispiel 37, wobei die Nutzerinteraktion zumindest eines der folgenden Tätigkeiten umfasst: Drücken einer Taste am Roboter; Bewegen des Roboters, sodass ein Neigungssensor oder eine Gyrosensor des Roboters auf die Bewegung reagiert, Berühren eines berührungsempfindlichen Sensors am Roboter.
Beispiel 39: Verfahren gemäß Beispiel 36,
   wobei die bestimmte Nutzerinteraktion mittels einer direkten drahtlosen Übertragung mit kurzer Reichweite, insbesondere kleiner 10 m, kleiner 5 m oder kleiner 1 m, erfolgt, wobei zur drahtlosen Übertragung eine andere Methode verwendet wird als für die Kommunikationsverbindung zum Server (3).
Beispiel 40: Verfahren gemäß Beispiel 36,
   wobei die direkte drahtlose Übertragung kurzer Reichweite mittels eines Verfahrens zur Nahfeldkommunikation (NFC) oder Infrarot-Kommunikation zwischen dem Roboter (1) und dem mobilen Endgerät (2) oder zwischen dem Roboter (1) und einem anderen Endgerät erfolgt.
Beispiel 41: Verfahren gemäß Beispiel 36,
   wobei die bestimmte Nutzerinteraktion mittels einer kabelgebundenen Verbindung zwischen mobilem Endgerät (2) und Roboter (1) erfolgt.
Beispiel 42: Verfahren gemäß Beispiel 36,
   wobei die Nutzerinteraktion durch Einscannen eines Strichcodes oder QR-Codes, der am Roboter angebracht oder von diesem angezeigt wird, mittels einer Kamera des mobilen Endgeräts erfolgt.
Beispiel 43: Verfahren gemäß Beispiel 40, wobei zwischen Roboter und dem mobilen Endgerät ein pseudozufälliger Code oder ein digitales Zertifikat übertragen wird.
Beispiel 44: System, das aufweist:
   einen autonomen. mobilen Roboter (1);
   mindestens zwei mobile Endgerät (2),
   wobei die mobilen Endgeräte (2) jeweils dazu ausgebildet sind, mit dem Roboter (1) zu kommunizieren; und
   wobei der Roboter dazu ausgebildet ist, Änderungen von im Roboter (1) gespeicherten Informationen durch eines der mobilen Endgeräte (2) zu ermöglichen und eine Nachricht betreffend eventuelle Änderungen an mindestens ein anderes der mobilen Endgeräte (2) zu senden.
Beispiel 45: System gemäß Beispiel 44,
   bei dem die im Roboter (1) gespeicherten Informationen zumindest eines der folgenden betreffen: die Bezeichnung des Roboters, Karteninformationen, Zeitpläne, Daten über die Kommunikationsverbindung mit einem Endgerät.
Beispiel 46: System gemäß Beispiel 44,
   bei dem der Roboter (1) dazu ausgebildet ist, die Änderung von im Roboter (1) gespeicherten Informationen, die über ein erstes der Endgeräte eingegeben wurden, durch ein zweites der Endgeräte anhand vorgebbarer Kriterien zu verweigern.
Beispiel 47: System, das aufweist:
   einen autonomen. mobilen Roboter (1);
   mindestens einen Server (3), der über einen Internetzugang verfügt;
   mindestens zwei mobile Endgerät (2),
   wobei die mobilen Endgeräte (2) jeweils dazu ausgebildet sind, mit dem Roboter (1) zu kommunizieren, wobei der Server (3) die Kommunikation vermittelt; und
   wobei der Roboter (1) und Server (3) dazu ausgebildet ist, im Roboter (1) gespeicherte Informationen mit im Server (3) gespeicherten Informationen zu synchronisieren.
Beispiel 48: System gemäß Beispiel 47,
   wobei der Roboter (1) oder der Server (3) dazu ausgebildet ist, anhand vorgegebener Kriterien zu entscheiden, an welche(s) der Endgeräte (2) Änderungen der im Roboter gespeicherten Informationen mitgeteilt werden.

## Patentansprüche

1. System, das aufweist:
einen autonomen, mobilen Roboter (1);
mindestens zwei mobile Endgeräte (2),
wobei die mobilen Endgeräte (2) jeweils dazu ausgebildet sind, mit dem Roboter (1) zu kommunizieren; und
wobei der Roboter dazu ausgebildet ist, Änderungen von im Roboter (1) gespeicherten Informationen durch eines der mobilen Endgeräte (2) zu ermöglichen und eine Information betreffend Änderungen an mindestens ein anderes der mobilen Endgeräte (2) zur Verfügung zu stellen.

2. System gemäß Anspruch 1,
bei dem die im Roboter (1) gespeicherten Informationen zumindest eines der folgenden betreffen: die Bezeichnung des Roboters, Karteninformationen, Zeitpläne, Daten über die Kommunikationsverbindung mit einem Endgerät.

3. System gemäß einem der Ansprüche 1 oder 2,
bei dem der Roboter (1) dazu ausgebildet ist, die Änderung von im Roboter (1) gespeicherten Informationen, die über ein erstes der Endgeräte eingegeben wurden, durch ein zweites der Endgeräte anhand vorgebbarer Kriterien zu verweigern.

4. System gemäß einem der Ansprüche 1 bis 3, wobei das System zusätzlich aufweist:
mindestens einen Server (3), der über einen Internetzugang verfügt;
wobei der Server (3) die Kommunikation zwischen Roboter (1) und Endgeräten (2) vermittelt.

5. System gemäß Anspruch 4,
wobei der Roboter (1) und der Server (3) dazu ausgebildet sind, im Roboter (1) gespeicherte Informationen mit im Server (3) gespeicherten Informationen zu synchronisieren.

6. System gemäß Anspruch 5,
wobei der Roboter (1) oder der Server (3) dazu ausgebildet ist, anhand vorgegebener Kriterien zu entscheiden, an welche(s) der Endgeräte (2) Änderungen der im Roboter gespeicherten Informationen mitgeteilt werden.

7. System gemäß einem der Ansprüche 1 bis 6,
wobei Informationen oder Prioritäten positionsabhängig sind.

8. System gemäß einem der Ansprüche 1 bis 7,
wobei eine Nutzerverwaltung in einem Cloudservice zur Verfügung gestellt wird.

9. System gemäß Anspruch 8,
wobei die Nutzerverwaltung am Roboter (1) eingerichtet ist.

10. System gemäß einem der Ansprüche 4 bis 9,
wobei der Server (3) zumindest einen Teil der Daten länger speichert als der Roboter (1).

11. System gemäß einem der Ansprüche 4 bis 10,
wobei der Server (3) ein Backup ermöglicht.

12. System gemäß Anspruch 11,
wobei das Backup für den Robotertausch genutzt werden kann.

13. System gemäß einem der Ansprüche 11 oder 12,
wobei das Backup für einen weiteren Roboter genutzt werden kann.
